# EUROPÄISCHE PATENTSCHRIFT

(11) **EP 0 504 352 B1**
(45) Veröffentlichungstag und Bekanntmachung des Hinweises auf die Patenterteilung: **11.05.1994**
(21) Anmeldenummer: 91917190.0
(22) Anmeldetag: 03.10.1991
(51) Int. Cl.: B23K 15/08, C21D 9/38

(54) **VERFAHREN UND VORRICHTUNG ZUR HERSTELLUNG VON TEXTURWALZEN**
PROCESS AND DEVICE FOR MANUFACTURING A TEXTURING ROLLER
PROCEDE ET DISPOSITIF POUR LA FABRICATION DE CYLINDRES DE TEXTURISATION

(30) Priorität: 05.10.1990 DE 4031547
(43) Veröffentlichungstag der Anmeldung: 23.09.1992
(73) Patentinhaber: SIDMAR N.V., B-9042 Gent (BE)
(72) Erfinder: SERMUND, Gerald, D-2300 Kiel 1 (DE); WILHARM, Michael, D-2300 Kiel 1 (DE); BOPPEL, Wolfgang, D-2308 Preetz (DE)
(74) Vertreter: Van Malderen, Michel
(86) Internationale Anmeldenummer: DE9100786
(87) Internationale Veröffentlichungsnummer: WO9205911

(56) Entgegenhaltungen:
- EP-A- 0 076 868
- EP-A- 0 108 376
- DE-A- 2 354 323
- FR-A- 1 518 224
- JP-A-63 177 978
- US-A- 3 371 190
- US-A- 3 404 254
- STAHL UND EISEN; Vol. 110, No. 3, 14 March 1990, Düsseldorf DE, pages 55-60, R. PANKERT: "Aufrauhen von Arbeitswalzen in Kaltwalzwerken"
- OPTIK; Vol. 77, Nr. 2, September 1987, Stuttgart DE,; pages 83-92; W. BOPPEL: "Schnelles Elektronenstrahlgravierverfahren zur Gravur von Metallzylindern"

## Beschreibung

Die Erfindung betrifft ein Verfahren zur Herstellung von Texturwalzen mit einer Oberflächenstruktur in Form von Ausnehmungen, bei dem die Ausnehmungen in der Oberfläche der Texturwalze mittels eines Elektronenstrahls erzeugt werden, sowie eine Vorrichtung zur Durchführung des Verfahrens.

Zur Herstellung derartiger Texturwalzen oder Dressierwalzen, die insbesondere zur Erzeugung einer Oberflächenstruktur auf Stahlblechen verwendet werden, sind in der Vergangenheit in Form von Ausnehmungen, Vertiefungen oder Kratem unterschiedliche Verfahren angewendet worden. Zum einen erfolgte eine Partikelbeaufschlagung mit Stahlkies entsprechend einem Schrotschuß, zum anderen wurden die Vertiefungen im Oberflächenbereich der Texturwalze mit Hilfe einer Elektroerosion oder mit Hilfe von Lasern erzeugt. Die Elektroerosion und die Partikelbeaufschlagung mit Stahlkies führen jedoch zu scharfkantig begrenzten Vertiefungen, deren Kantenbereiche zum Abbrechen und somit zur Staubentwicklung neigen. Bei der Elektroerosion und der Laserbeaufschlagung tritt darüber hinaus eine Oxidation des Walzenmetalles und damit eine Aschenbildung auf. Die Anzahl der auf der Walzenoberfläche zu erzeugenden Vertiefungen ist bei einer Bearbeitung mit Lasern durch die Trägheit der verwendeten Spiegel begrenzt.

Aus der DE-A- 28 40 702 sind ein Verfahren und eine Vorrichtung zur Qualitätsverbesserung von Stahlfeinblechen bekannt. In dieser Druckschrift ist angegeben, daß auf der Walzenoberfläche eine Oberflächenstruktur mit einer intermittierenden Energiestrahlung entlang einer spiralförmigen Bahn erfolgt. Insbesondere wird angegeben, daß als Energiestrahlung ein Laserstrahl verwendet werden kann. Es wird auch schon darauf hingewiesen, daß grundsätzlich ein Elektronenstrahl verwendet werden kann. Konkrete Hinweise zum Ablauf eines Verfahrens unter Verwendung eines Elektronenstrahles oder zum Aufbau einer dieses Verfahren anwendenden Vorrichtung werden jedoch nicht gegeben.

Aus der EP -A1- 0 119 182 ist es bekannt, eine Walzenoberfläche mit Hilfe einer Laserstrahlung oder einer Elektronenstrahlung zu beaufschlagen. Mit Hilfe dieser Strahlung wird eine spiralförmige Bahn auf der Walze erzeugt. Insbesondere ist hier daran gedacht, in den Bereich der Strahlenbeaufschlagung ein Gas, beispielsweise Sauerstoff, zu blasen. Durch den Sauerstoffzutritt erfolgt im Bereich der Strahlenbeaufschlagung eine Oxidierung des Walzenmetalles. Es wird dadurch die Ausbildung eines Kraterwalles, der eine von der Strahlung erzeugte Ausnehmung umschließt, weitgehend vermieden, da das verdampfende oder in flüssigem Zustand aus der Ausnehmung herausgeschleuderte Material sehr schnell mit dem Sauerstoff reagiert.

Aus der EP-A2-0 168 374 ist es bekannt, eine Oberflächenstruktur auf einer Texturwalze mit Hilfe von Laserstrahlung durchzuführen und die Verwendung von Spiegeln dadurch zu vermeiden, daß die zu beaufschlagende Texturwalze rotatorisch und translatorisch an einem ortsfesten Laser vorbeibewegt wird.

Die mit den bekannten Verfahren hergestellten Texturwalzen lassen keine befriedigenden Standzeiten zu, da aufgrund einer relativ schnell abnehmenden Rauhigkeit der Walzenoberfläche eine Verstärkung der Druckkraft während des Betriebes erforderlich ist. Diese stärkere Druckkraft führt jedoch zu anderen Biecheigenschaften, insbesondere zu Veränderungen der Härte und der Biegeeigenschaften. Da diese Veränderungen während der Produktion auftreten, können konstante Produkteigenschaften nicht gewährleistet werden.

In der Zeitschrift " Stahl und Eisen", Bd. 110, Nr. 3, 14. März 1990, Düsseldorf, DE, Seite 55-60; Artikel von R. Pankert: "Aufrauhen von Arbeitswalzen in Kaltwalzwerken", ist unter anderem das Aufrauhen von Texturwalzen durch Erzeugen von Oberflächenstrukturen mittels eines Elektronenstrahls näher beschrieben. Als Vorteil des Elektronenstrahl-Verfahrens werden dort die Steuerbarkeit der Strahlleistung, der Einwirkdauer (Schußdauer) und der Einwirkhäufigkeit (Schußfrequenz) des Elektronenstrahls auf die Materialoberfläche sowie die Möglichkeit der Strahlablenkung und der Strahlfokussierung genannt, wobei z.B. die Tiefe der Ausnehmungen von der Schußdauer und der Durchmesser der Ausnehmungen von der Strahlfokussierung abhängig sind. Der Artikel enthält aber keinerlei Hinweise auf eine geeignete Strahlsteuerung zur Erzeugung einer widerstandsfähigen Oberflächenstruktur auf den Texturwalzen.

In der Zeitschrift "Optik", Bd. 77, Nr. 2, September 1987, Stuttgart, DE, Seite 83-92; Artikel von W. Boppel: "Schnelles Elektronenstrahlgravierverfahren zur Gravur von Metallzylindern" wird die Gravur von mit Kupfer beschichteten Stahlzylindern als Druckformen für den Tiefdruck und die Gravur von Oberflächenstrukturen auf Texturwalzen im einzelnen beschrieben. Auch in diesem Artikel wird der Vorteil der Steuerbarkeit der verschiedenen Strahlparameter hervorgehoben, ohne daß konkrete Steuermaßnahmen zur Erzeugung einer widerstandsfähigen Oberflächenstruktur auf den Texturwalzen zu entnehmen sind.

Aufgabe der vorliegenden Erfindung ist es daher, ein Verfahren zur Hertsellung von Texurwalzen mit einer Oberflächenstruktur in Form von Ausnehmungen in der Oberfläche der Texturwalze sowie eine Vorrichtung zur Durchführung des Verfahrens derart zu verbessern, daß eine hohe Belastung widerstehende Oberflächenstruktur erzeugt wird.

Diese Aufgabe wird bezüglich des Verfahrens durch die Merkmale des Patentanspruchs 1 und bezüglich der Vorrichtung durch die Merkmale des Patentanspruchs 7 gelöst.

Vorteilhafte Weiterbildungen sind in den Unteransprüchen angegeben.

Mit Hilfe dieses Verfahrens ist es möglich, im Bereich eines die Ausnehmung umgebenden Kraterwalles eine sehr gleichförmige Oberflächenstruktur unter Vermeidung von Kanten und Vorsprüngen zu erzeugen. Die Vermeidung von Kanten hat insbesondere den Vorteil, daß die Oberflächenstruktur während einer Beaufschlagung von Blechen nur geringen Formveränderungen unterliegt und somit eine langandauernde gleichmäßige Beaufschlagung gewährleistet ist. Die Vermeidung von Vorsprüngen weist den Vorteil auf, daß ein Abbrechen von Materialteilen vermieden wird. Dieses Abbrechen hätte neben einer Veränderung der Oberflächenstruktur insbesondere eine Staubentwicklung zur Folge. Mit Hilfe der entsprechend dem Verfahren hergestellten Texturwalzen lassen sich nicht nur Stahlbleche, sondern auch beliebige andere verformbare Materialien, beispielsweise Aluminiumbleche, beaufschlagen. Aufgrund der mit Hilfe des Verfahrens herstellbaren sehr gleichmäßigen Oberflächenstruktur ist es möglich, im Bereich der Oberfläche eines beaufschlagten Bleches einen gleichmäßigen Ölfilm anzuordnen, der insbesondere bei Tiefziehverformungen von Vorteil ist. Darüber hinaus vermittelt die Oberflächenstruktur aber auch Beschichtungen des Bleches, beispielsweise Lackierungen, eine gute Haftung.

Gemäß einer bevorzugten Ausführungsform der Erfindung ist vorgesehen, daß der Elektronenstrahl während der Arbeitsintervalle fokussiert und während des Zwischenintervalles defokussiert wird. Die Veränderung der Energiedichte des Elektronenstrahles mit Hilfe einer Fokussierung weist den Vorteil auf, daß die Veränderungen der Energiedichte mit sehr kurzen Zeitverzögerungen erfolgen können und daß lonisationseffekte entlang der Strahlausbreitung nur unwesentlichen Veränderungen unterworfen sind. Hieraus resultiert eine gute Reproduzierbarkeit und die Vermeidung von die Elektronenausbreitung deutlich beeinflussenden Einschwingvorgängen.

Gemäß einer anderen Ausführungsform der Erfindung ist vorgesehen, daß sowohl während der Arbeitsintervalle als auch während des Zwischenintervalles eine im wesentlichen konstante Scharfeinstellung des Elektronenstrahles vorgesehen wird. Diese konstante Scharfeinstellung hat zur Folge, daß während des gesamten Bearbeitungsvorganges ein lonengleichgewicht vorliegt, das zur Erzeugung einer exakt reproduzierbaren Oberflächenstruktur erforderlich ist. Eine Störung des Ionen - gleichgewichtes hätte den Nachteil, daß durch das jeweilige Auftreten von Ausgleichsvorgängen die Arbeitsfrequenz einer nach dem Verfahren arbeitenden Vorrichtung herabgesetzt würde.

Gemäß einer weiteren bevorzugten Ausführungsform ist vorgesehen, daß während der Erzeugung einer Ausnehmung im Bereich der Oberfläche eine an eine Walzenbewegung angepaßte Nachführung des Elektronenstrahles durchgeführt wird. Hierdurch ist es möglich, äußerst symmetrische Ausbildungen der Ausnehmungen und der Kraterwälle zu erzeugen. Es wird dadurch vermieden, daß im Bereich eines mit der Walze bearbeiteten Bleches Vorzugsrichtungen auftreten, die eine Freizügigkeit bei einer Verarbeitung des Bleches beeinträchtigen würden.

Weitere Einzelheiten der vorliegenden Erfindung ergeben sich aus der nachfolgenden Beschreibung und den beigefügten Zeichnungen, in denen bevorzugte Ausführungsformen der Erfindung beispielhaft veranschaulicht sind.

In den Zeichnungen zeigen:
- Fig. 1:: Eine Prinzipdarstellung einer Vorrichtung zur Herstellung einer Oberflächenstruktur,
- Fig. 2:: eine Prizipdarstellung der Strahlerzeugung,
- Fig. 3:: ein Blockschaltbild der Steuerung der Vorrichtung,
- Fig. 4:: ein Blockschaltbild der Linsenansteuerung,

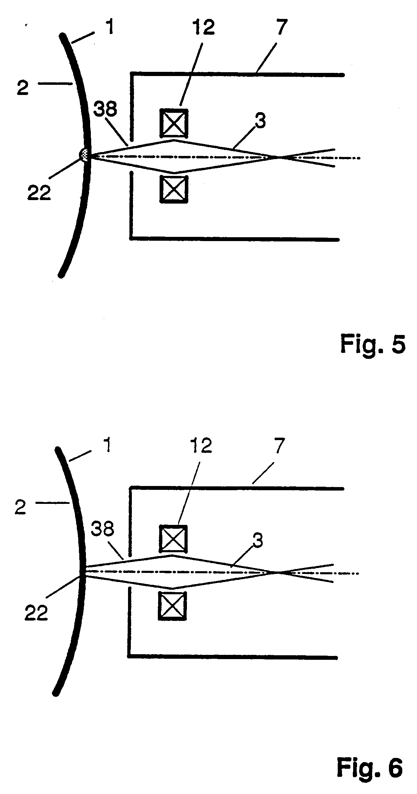

- Fig. 5:: eine Prinzipdarstellung eines fokussierten Elektronenstrahles,
- Fig. 6:: eine Prinzipdarstellung eines defokussierten Elektronenstrahles,
- Fig. 7:: eine Zuordnung einer Elektronenstrahlintensität zu einer beaufschlagten Fläche während einer Vorbehandlung,
- Fig. 8:: eine Zuordnung einer Elektronenstrahlintensität zu einer beaufschlagten Fläche während der Erzeugung einer Ausnehmung,
- Fig. 9:: eine Zuordnung einer Elektronenstrahlintensität zu einer beaufschlagten Fläche während einer Nachbehandlung,
- Fig. 10:: ein Zeitdiagramm zur Zuordnung von Vorbehandlungs-, Arbeits- und Nachbehandlungsintervallen und
- Fig. 11:: ein Zeitdiagramm einer Mehrfachpulsansteuerung, bei der zwei aufeinander folgenden Arbeitsintervallen jeweils ein Vorbehandlungs- und ein Nachbehandlungsintervall zugeordnet ist.

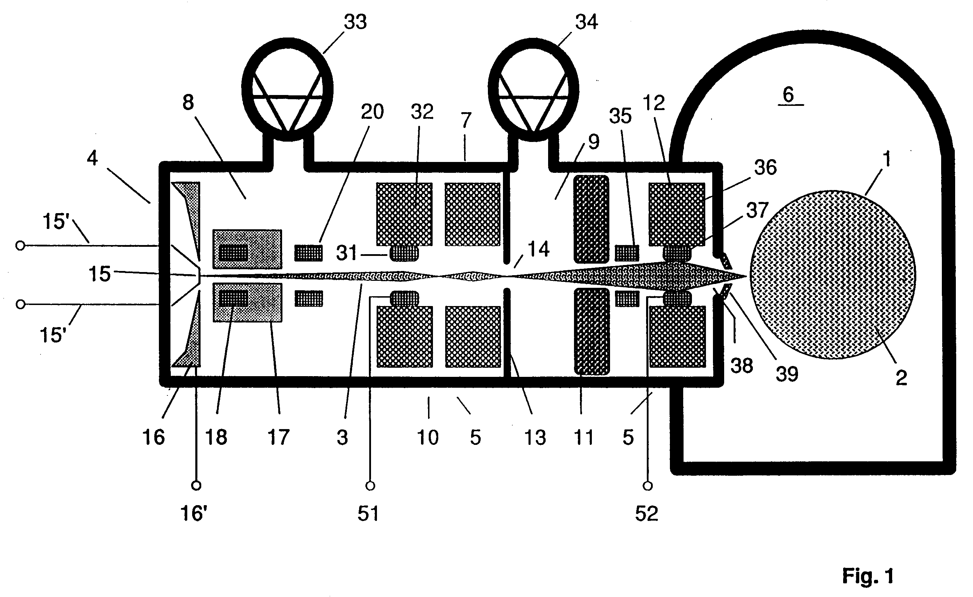

Fig. 1 zeigt eine Prinzipdarstellung einer Vorrichtung zur Herstellung einer Oberflächenstruktur im Bereich der Oberfläche 1 einer Texturwalze 2. Die Vorrichtung besteht im wesentlichen aus einem einen Elektronenstrahl 3 erzeugenden Strahlgenerator 4, einem Linsensystem 5 sowie einer die Texturwalze 2 aufnehmenden Vakuumkammer 6. Der Strahlgenerator 4 und das Linsensystem 5 sind im Bereich einer Strahleinrichtung 7 angeordnet, die in eine Hauptkammer 8 sowie eine Zwischenkammer 9 unterteilt ist. In der Hauptkammer 8 sind der Strahlgenerator 4 sowie eine Brennweiteneinstellung 10 angeordnet, die als ein Teil des Linsensystems 5 ausgebildet ist. Im Bereich der Zwischenkammer 9 sind im wesentlichen eine Wechselblende 11 sowie eine Fokussierung 12 angeordnet, die gemeinsam mit der Brennweiteneinstellung 10 die wesentlichen Elemente des Linsensystems 5 ausbilden. Die Hauptkammer 8 ist von der Zwischenkammer 9 durch eine Vakuumdrossel 13 getrennt, die eine im wesentlichen zentrisch angeordnete und den Durchtritt des Elektronenstrahles 3 zulassende Ausnehmung 14 aufweist. Durch die Vakuumdrossel 13 ist es möglich, im Bereich der Hauptkammer 8 und der Zwischenkammer 9 unterschiedliche Druckverhältnisse vorzusehen. So ist es beispielsweise möglich, im Bereich der Hauptkammer 8 einen Druck von etwa 8 x 0,00001 bar und im Bereich der Zwischenkammer 9 einen Druck von etwa 8 x 0,001 bar vorzusehen.

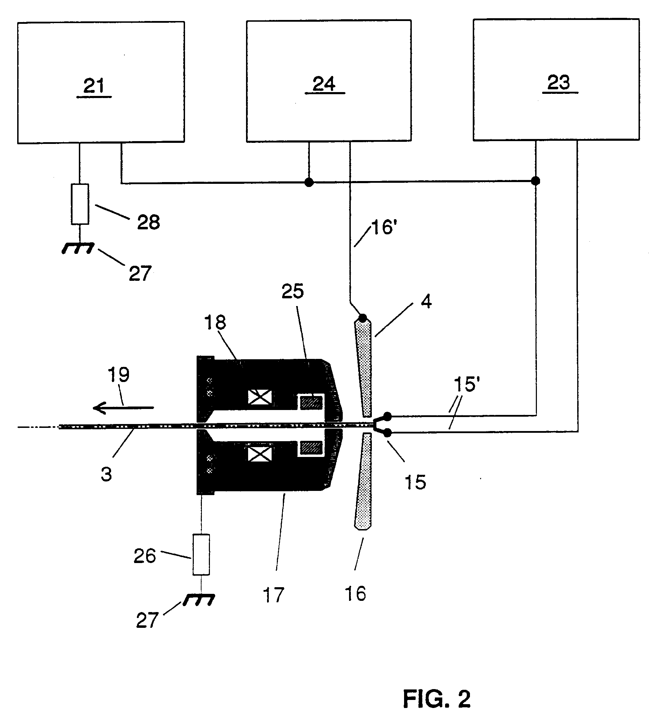

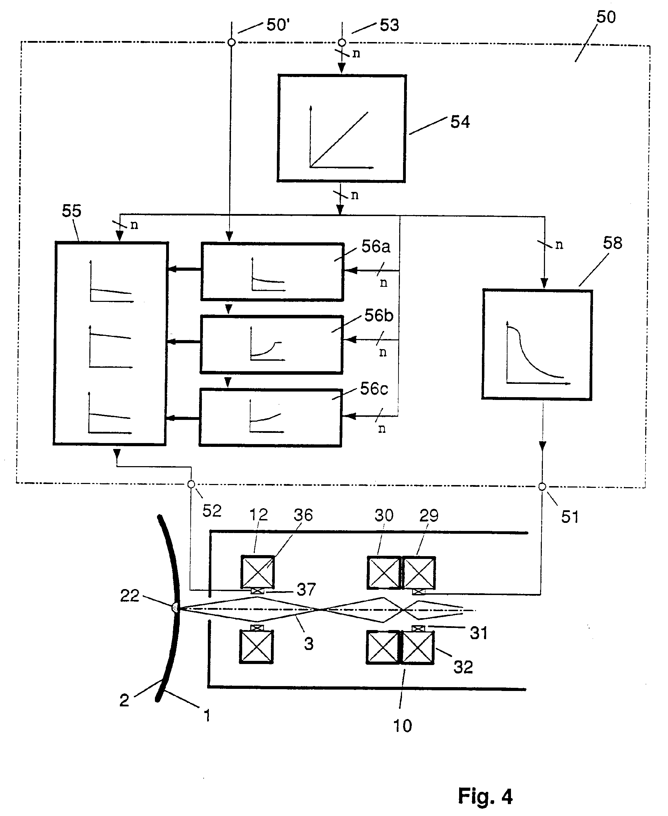

Der Strahlgenerator 4 besteht im wesentlichen aus einer Kathode 15, einem Wehneltzylinder 16 sowie einer Anode 17. Im Bereich der Anode 17 ist ein den Elektronenstrahl 3 bündelnder Anodenzentrierer 18 angeordnet. In Ausbreitungsrichtung des Elektronenstrahles 3 ist hinter der Anode 17 ist ein Folgezentrierer 20 angeordnet, der gleichfalls eine Bündelung des Elektronenstrahles 3 vornimmt und Streuverluste vermeidet. Die Kathode 15 ist über eine Leitung 15' mit einer Hochspannungseinheit 21 verbunden (Fig.2), die eine Spannung bis zu etwa - 50 Kilovolt generiert. Ein typischer Wert liegt bei etwa - 35 Kilovolt. Bei einer derartigen Spannung können im Bereich der Oberfläche 1 Ausnehmungen 22 mit einer typischen Tiefe von etwa 7 Mikrometern pro Mikrosekunde erzeugt werden. Bei einer Reduktion der Hochspannung auf etwa - 25 Kilovolt beträgt die typische Tiefe der Ausnehmung 22 (Fig. 4) etwa 3 bis 4 Mikrometer pro Mikrosekunde. Die Kathode 15 ist darüber hinaus mit einer Heizstromversorgung 23 (Fig. 2) verbunden. Der Wehneltzylinder 16 wird über eine Leitung 16' von einem Spannungsgenerator 24 gespeist, der gegenüber der an der Kathode 15 anliegenden Spannung ein Potential von etwa - 1000 Volt erzeugt. Im Bereich der Anode 17 ist neben den den Anodenzentrierer 18 ausbildenden Zentrierspulen eine lonenfalle 25 vorgesehen, die im Bereich der Anode 17 auftretende Ionen aus dem Bereich des Elektronenstrahles 3 ableitet. Die Anode 17 ist über einen Widerstand 26 mit einem Masseanschluß 27 verbunden. Darüber hinaus ist auch die Hochspannungseinheit 21 im Bereich eines Bezugsanschlußes über einen Widerstand 28 gegen Masse geschaltet. Als Material für die Kathode 15 sind insbesondere Wolframdrähte geeignet.

Die Brennweiteneinstellung 10 ist aus einer ersten Zoom-Linse 29 sowie einer zweiten Zoom-Linse 30 aufgebaut, die in Ausbreitungsrichtung 19 hintereinander angeordnet sind (Fig. 4). Die erste Zoom-Linse 29 besteht aus einer dynamischen Linse 31 sowie einer statischen Linse 32.

Die zweite Zoom-Linse 30 ist ohne eine dynamische Linse 31 ausgebildet. Das Vakuum im Bereich der Hauptkammer 8 wird von einer Vakuumpumpe 33 und das Vakuum im Bereich der Zwischenkammer 9 von einer Vakuumpumpe 34 aufrechterhalten (Fig. 1). Insbesondere ist daran gedacht, die Pumpen 33,34 als Turbomolekularpumpen auszubilden. Im Bereich der Zwischenkammer 9 ist zwischen der Wechselblende 11 und der Fokussierung 12 ein Zentrierer 35 vorgesehen, der Streuverluste des Elektronenstrahles 3 vermeidet. Die Fokussierung 12 besteht im wesentlichen aus einer statischen Linse 36 und einer dynamischen Linse 37. Die dynamischen Linsen 32 und 36 sind jeweils im Bereich der dem Elektronenstrahl 3 zugewandten Innenflächen der statischen Linsen 32 und 36 angeordnet. An der der Vakuumkammer 6 zugewandten Seite weist die Einrichtung 7 eine Austrittsöffnung 38 auf, in der eine Düse 39 angeordnet ist.

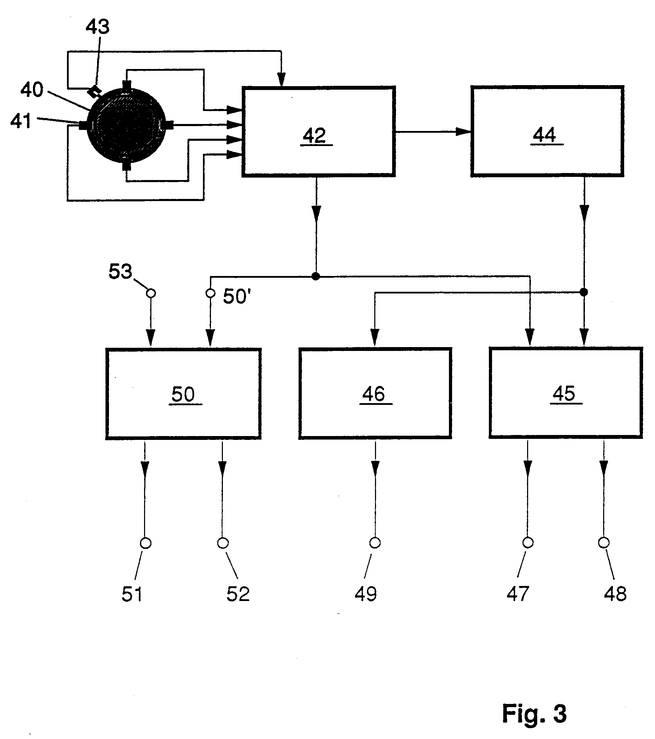

Zur Steuerung der reproduzierbaren Positionierung der Ausnehmungen 22 auf der Oberfäche der Texturwalze 2 ist eine mit der Drehbewegung der Texturwalze 2 synchronisierte Rasterscheibe 40 vorgesehen, die über Abnehmer 41 mit einer Auswertung 42 verbunden ist (Fig. 3). Die Auswertung 42 stellt für nachfolgende Steuerelemente einen Takt zur Verfügung, der eine exakte Erfassung einer aktuellen Orientierung der Texturwalze 2 ermöglicht. Mit Hilfe einer Nullpunkterfassung 43 erfolgt eine definierte Festlegung eines Bezugspunktes. Die Auswertung 42 ist mit einer Steuerung 44 verbunden, die beispielsweise als ein Phase-Locked-Loop-Schaltkreis ausgebildet sein kann. Die Steuerung 44 speist einen Sägezahngenerator 45 sowie eine Vorschubtakterzeugung 46. Der Sägezahngenerator 45 weist einen Gravursägezahn-Anschluß 47 sowie einen Vorschubsägezahn-Anschluß 48 auf. Die Vorschubtakterzeugung 46 ist mit einem Vorschubschrittmotor-Anschluß 49 versehen. Die Auswertung 42 ist mit dem Sägezahngenerator 45 und über einen Steuer-Anschluß 50' mit einer Linsenansteuerung 50 verbunden. Die Linsenansteuerung 50 weist einen Zoomlinsen-Anschluß 51, einen Schärfelinsen-Anschluß 52 und einen Steuer-Anschluß 53 auf.

Zur Ansteuerung des Linsensystems 5 sind in der Linsenansteuerung 50 mehrere Kennlinien-Glieder zur Signalformung vorgesehen (Fig. 4). Über den Steuer-Anschluß 53 wird eine Steuergröße für das Elektronenstrahl-Aufzeichnungsorgan, welche die Geometrie der zu erzeugenden Ausnehmungen 22 bestimmt, über eine Linearisierung 54 an ein Schärfeglied 55, an Zeitgeber-Stufen 56a, 56b und 56c sowie an ein Zoom-Glied 58 gegeben. Die eingegebene Steuergröße wird im Schärfeglied 55 mittels Kennlinien in Einstellwerte für die Fokussierung 12 umgesetzt, welche der dynamischen Linse 37 der Fokussierung 12 zugeführt werden. Die Kennlinie des Zoom-Gliedes 58 setzt die Steuergröße in entsprechende Einstellwerte für die Brennweiteneinstellung 10 um, die an die dynamische Linse 31 gelangen.

Zur zeitlichen Koordinierung der Verfahrensabläufe bei der Herstellung der Ausnehmungen 22 wird der in der Auswertung 42 gewonnene Takt und das im Sägezahngenerator 45 erzeugte Sägezahnsignal verwendet (Fig. 4).

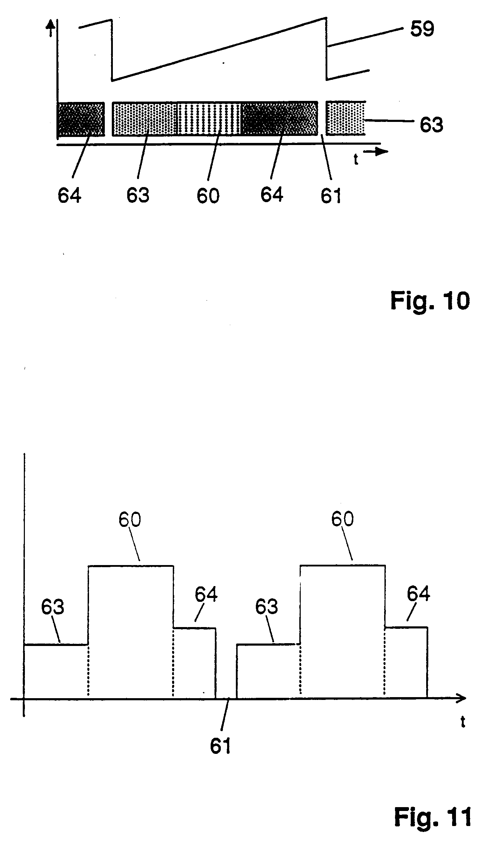

Das zur Herstellung einer Ausnehmung 22 vorgesehene Zeitintervall entspricht einer Periode des Sägezahnsignals 59 (Fig. 10), wobei jeweils der Anfang eines Zeitintervalls durch einen Takt markiert wird.

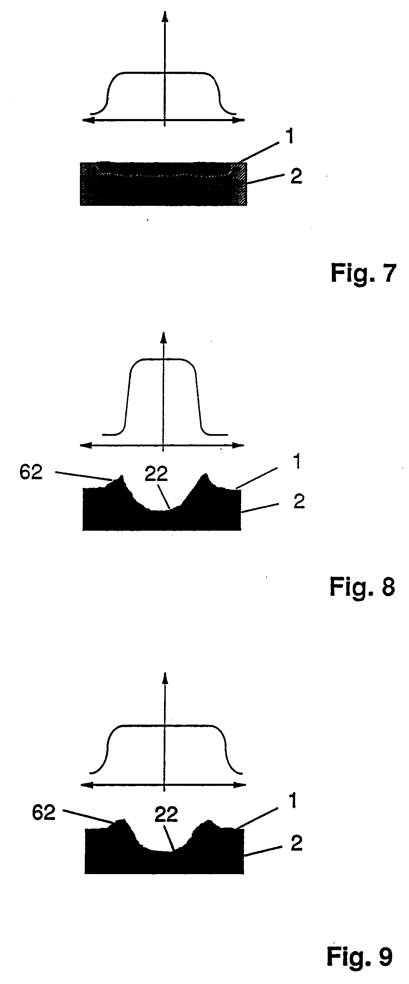

Das Zeitintervall umfaßt mindestens ein Arbeitsintervall 60 und ein Zwischenintervall 61. Vorzugsweise ist noch ein vor dem Arbeitsintervall 60 liegendes Vorbehandlungsintervall 63 und/oder ein hinter dem Arbeitsintervall 60 liegendes Nachbehandlungsintervall 64 vorgesehen (Fig. 10). Während des Arbeitsintervalles 60 ist die Fokussierung 12 derart gesteuert, daß der Elektronenstrahl 3 eine die Ausnehmung 22 erzeugende bzw. diese vergrößernde Energiedichte aufweist. Mindestens während des Überganges vom Arbeitsintervall 60 zum Zwischenintervall 61 erfolgt ein leichtes Anschmelzen eines die Ausnehmung 22 umgebenden Kraterwalles 62 (Fig. 8 und 9), durch das gegebenenfalls vorhandene Ungleichmäßgkeiten nivelliert werden.

Während des Vorbehandlungsintervalles 63 findet eine Säuberung und eine Vortemperierung der von der Ausnehmung 22 und dem Kraterwall 62 beanspruchten Fläche statt. Durch die Vorbehandlung wird eine dauerhafte Verbindung des Kraterwalles 62 mit der Oberfläche 1 gewährleistet. Während des Nachbehandlungsintervalles 64 findet für eine definierte Zeitspanne ein Anschmelzen des Kraterwalles 62 statt. Insbesondere ist daran gedacht, während eines Zeitintervalles mindestens zwei Arbeitsintervalle 60 vorzusehen, in denen die Ausnehmung 22 hergestellt wird, und die Arbeitsintervalle 60 durch ein weiteres Zwischenintervall 61 zu trennen (Fig.11).

Grundsätzlich ist es auch denkbar, dem Zeitintervall mehrere Perioden des Sägezahnsignals 59 zuzuordnen und beispielsweise während jeder Periode ein Arbeitsintervall vorzusehen.

Die jeweilige Zeitdauer des Arbeitsintervalles 60, des Vorbehandlungsintervalles 63 und/oder des Nachbehandlungsintervalles 64 wird in den Zeitgeber-Stufen 56a, 56b und 56c der Linsenansteuerung 50 (Fig.4) in Abhängigkeit von der Steuergröße ermittelt, indem die Steuergröße mittels Kennlinien in die jeweilige Zeitdauer der Intervalle bestimmende Taktsignale umgewandelt werden.

Die Zeitgeber-Stufe 56a, welche die Zeitdauer des Vorbehandlungsintervalles 63 bestimmt, wird vom Takt am Steuer-Anschluß 50' getriggert.

Nach Ablauf des Vorbehandlungsintervalles 63 wird die Zeitgeber-Stufe 56b, welche die Zeitdauer des Arbeitsintervalles 60 festlegt, von der Zeitgeber-Stufe 56a aktiviert. Nach Ablauf des Arbeitsintervalles 60 wird die Zeitgeber-Stufe 56c, welche die Zeitdauer des Nachbehandlungsintervalles 64 bestimmt, von der Zeitgeber-Stufe 56b gestartet.

Die in den Zeitgeber-Stufen 56a, 56b und 56c gewonnenen Taktsignale werden dem Schärfeglied 55 zugeführt und steuern die Ausgabe der unterschiedlichen Einstellwerte für die Fokussierung 12 im Vorbehandlungsintervall 63, im Arbeitsintervall 60 und /oder Nachbehandlungsintervall 64.

Über eine Nachführung des Elektronenstrahls 3 kann eine Kompensation der Relativbewegung der Texturwalze 2 bezüglich der Düse 39 vorgenommen werden. Der Elektronenstrahl 3 bleibt hierdurch exakt auf ein vorgewähltes Gebiet ausgerichtet und führt zur Ausbildung sehr symmetrischer Ausnehmungen 22.Aufgrund der sehr kurzen Zeitverzögerungen bei der Ansteuerung des Linsensystems 5 können etwa 150.000 Ausnehmungen 22 je Sekunde hergestellt werden. Bei Verwendung geeignet schneller Steuervorrichtungen ist es auch möglich, Taktfrequenzen von 300.000 bis 600.000 Ausnehmungen pro Sekunde zu realisieren. Zur Ermöglichung dieser Taktfrequenzen wird die Texturwalze mit einer Umdrehungsgeschwindigkeit von etwa 10 Umdrehungen pro Sekunde rotatorisch beaufschlagt und mit einer geeigneten translatorischen Bewegung versehen. Bei einer Zeitspanne von etwa 16 Mikrosekunden zur Erzeugung einer Ausnehmung 22 kann eine komplette Texturwalze 2 innerhalb von etwa 45 Minuten bearbeitet werden. Die Energieaufnahme durch die Texturwalze beträgt in dieser Zeit lediglich etwa 500 Watt. Unerwünschte Veränderungen im Bereich der Oberfläche 1 durch thermische Verspannungen oder ähnliche Vorgänge sind somit mit hoher Wahrscheinlichkeit ausgeschlossen. Als Zeitspanne für das Zwischenintervall 61 hat sich ein Zeitraum von etwa einer Mikrosekunde als zweckmäßig erwiesen. Von der Ausnehmung 22 und dem Kraterwall 62 wird ein Gebiet mit einem Durchmesser von etwa 30-400 Mikrometern eingenommen.

## Patentansprüche

1. Verfahren zur Herstellung von Texturwalzen mit einer Oberflächenstruktur in Form von Ausnehmungen (22), bei dem die Ausnehmungen (22) in der Oberfläche (1) der Texturwalzen (2) innerhalb von Zeitintervallen mittels eines Elektonenstrahls (3) erzeugt werden, **dadurch gekennzeichnet**, daß die Zeitintervalle jeweils in mindestens zwei Arbeitsintervalle (60) mit einem die Arbeitsintervalle (60) voneinander trennenden Zwischenintervall (61) unterteilt wird und daß die Oberfläche (1) durch den Elektronenstrahl (3) in den Arbeitsintervallen (60) jeweils mit einer die Ausnehmungen (22) erzeugenden Energiedichte und im Zwischenintervall (61) mit einer jeweils die Ausnehmungen (22) in ihrer Ausdehnung im wesentlichen belassenden Energiedichte beaufschlagt wird.

2. Verfahren nach Anspruch 1, **dadurch gekennzeichnet**, daß die Energiedichte des Elektronenstrahls (3) mittels einer Fokussier-Einrichtung (12) geändert wird und daß die Energiedichte während der Zwischenintervalle (61) durch Defokussieren gegenüber der Fokuseinstellung in den Arbeitsintervallen (60) verringert wird.

3. Verfahren nach Anspruch 1 oder 2, **dadurch gekennzeichnet**, daß eine Scharfeinstellung des Elektronenstrahles (3) sowohl während der Arbeitsintervalle (60) als auch während der Zwischenintervalle (61) vorgenommen wird.

4. Verfahren nach einem der Ansprüche 1 bis 3, **dadurch gekennzeichnet**, daß innerhalb von vor den Arbeitsintervallen (60) liegenden Vorbehandlungsintervallen (63) mit dem Elektronenstrahl (3) jeweils eine Temperaturerhöhung und eine Säuberung der Oberfläche (1) in einem der Ausnehmung (22) und dem Kraterrand (62) entsprechenden Gebiet durchgeführt wird.

5. Verfahren nach einem der Ansprüche 1 bis 4, **dadurch gekennzeichnet**, daß innerhalb von nach den Arbeitsintervallen (60) liegenden Nachbehandlungsintervallen (64) mit dem Elektronenstrahl (3) jeweils im Gebiet der Ausnehmung (22) und des Kraterwalles (62) eine Anschmelzung des Kraterwalles (62) durchgeführt wird.

6. Verfahren nach einem der Ansprüche 1 bis 5, **dadurch gekennzeichnet**, daß die Oberflächenstruktur auf der Oberfläche (1) der Texturwalze (2) durch eine Relativbewegung zwischen der Texturwalze (2) und einem den Elektronenstrahl (3) generierenden Strahlgenerator erzeugt wird und daß der Elektronenstrahl (3) mindestens während der Arbeitsintervalle (60) der Relativbewegung nachgeführt wird.

7. Vorrichtung zur Durchführung des Verfahrens nach einem der Ansprüche 1 bis 6, bestehend aus einer die Texturwalze (2) aufzunehmenden Vakuumkammer (6) und einer mit der Vakuumkammer (6) verbundenen Strahlerzeugungseinrichtung (7), die aus einem Strahlgenerator (4) zur Erzeugung des Elektronenstrahls (3), aus einer Brennweiten-Einrichtung (10) mit einem eine statische Linse (32) und eine dynamische Linse (31) aufweisenden langbrennweitigen ersten Linsensystem (29) und einem kurzbrennweitigen zweiten Linsensystem (30), aus einer Fokussier-Einrichtung (12) mit einem eine statische Linse (36) und eine dynamische Linse (37) aufweisenden dritten Linsensystem, aus einer mit dem Strahlgenerator (4) verbundenen ersten Steuereinrichtung (21; 23; 24) und aus einer mit der Brennweiten-Einrichtung (10) und der Fokussier-Einrichtung (12) verbundenen zweiten Steuereinrichtung ( 42, 44, 45, 46, 50), **dadurch gekennzeichnet**, daß die zweite Steuereinrichtung eine mit der Brennweiten-Einrichtung (10) und/oder der Fokussier-Einrichtung (12) verbundene Zeitsteuer-Einrichtung (55,56a, 56b, 56c,) zur Steuerung der Energiedichte des Elektronenstrahls (3) in den Vorbehandlungsintervallen (63), den Arbeitsintervallen (60), den Zwischenintervallen (61) und den Nachbehandlungsintervallen (64) durch Verstellen der dynamischen Linse (31) und/oder der dynamischen Linse (37) aufweist.

## Claims

1. Method for manufacturing texture drums having a surface structure in the form of recesses (22) wherein the recesses (22) located at the surface (1) of the texture drums (2) are produced with an electron beam (3) during time intervals, characterized in that the time intervals are divided in at least two working intervals (60) and one intermediate interval (61) separating the working intervals (60) from one another and in that the surface (1) is charged during the working intervals (60) by the electron beam having an energy density that generates the recesses (22) and during the intermediate interval (61) with an electron beam having an energy density that essentially leaves the recesses (22) in terms of its extent.

2. Method according to claim 1 characterized in that the energy density of the electron beam (3) is modified by means of a focusing device and in that the energy density during the intermediate interval (61) is weakened by defocusing with regards to the focus regulation during the working intervals (60).

3. Method according to claim 1 or 2 characterized in that the sharpness setting of the electron beam (3) is undertaken both during the working interval (60) as well as during the intermediate interval (61).

4. Method according to any one of the claims 1 to 3 characterized in that an increase of temperature and a cleaning of the surface (1) in a region corresponding to the recess (22) and to the crater edge (62) respectively is implemented with the electron beam (3) during pre-treatment intervals (63) preceding the working intervals (60).

5. Method according to any one of the claims 1 to 4 characterized in that a melting of the crater wall (62) is implemented with the electron beam (3) in the respective region of the recess (22) and of the crater wall (62) during after-treatment intervals (64) following the working intervals (60).

6. Method according to any one of the claims 1 to 5 characterized in that the surface structure of the surface (1) for the texture drum (2) is produced by a relative motion between the texture drum and a beam generator emitting the electron beam (3) and in that the electron beam (3) is guided according to the relative motion during the working intervals (60).

7. Device for performing the method according to any one of the claims 1 to 6 comprising a vacuum chamber (6) that accepts the texture drum (2) and a device (7) for emitting a beam bonded to the vacuum chamber (6), said device consisting in a beam generator (4) emitting an electron beam (3), a focal length setting (10) having a first zoom lens system (29) with a large focal length composed of a static lens (32) and a dynamic lens (31) and a second zoom lens system (30) with a small focal length, a focusing device (12) with a third zoom lens system having a static lens (36) and a dynamic lens (37), a first control device (21, 23, 24) bonded to the beam generator (4) and a second control device (42, 44, 45, 46, 50) bonded to the focal length setting (10) and to the focusing device (12) characterized in that the second control device presents a synchronization device (55, 56a, 56b, 56c) bonded to the focal length setting (10) and/or to the focusing device (12) in order to control the energy density of the electron beam (3) during the pre-treatment intervals (63), the working intervals (60), the intermediate intervals (61) and the post-treatment intervals (64) by controlling the dynamic lens (31) and/or the dynamic lens (37).

## Revendications

1. Procédé de fabrication de cylindres à texturer comportant une structure superficielle sous la forme d'évidements (22), procédé dans lequel les évidements (22) qui se trouvent à la surface (1) des cylindres à texturer (2) sont produits dans certains intervalles de temps à l'aide d'un faisceau électronique (3), caractérisé en ce que les intervalles de temps sont respectivement subdivisés en au moins deux intervalles de travail (60) séparés l'un de l'autre par un intervalle intermédiaire (61) et en ce que la surface (1) est alimentée pendant les intervalles de travail (60) par le faisceau électronique (3), respectivement, avec une densité d'énergie produisant les évidements (22) et, dans l'intervalle intermédiaire (61), avec une densité d'énergie qui ne change sensiblement pas la dimension des évidements (22).

2. Procédé selon la revendication 1, caractérisé en ce que la densité d'énergie du faisceau électronique (3) est modifiée à l'aide d'un dispositif de focalisation (12) et en ce que la densité d'énergie au cours de l'intervalle intermédiaire (61) est réduite par défocalisation par rapport à la focalisation règlée pendant les intervalles de travail (60).

3. Procédé selon la revendication 1 ou 2, caractérisé en ce qu'une mise au point du faisceau électronique (3) est effectuée autant au cours de l'intervalle de travail (60) qu'au cours de l'intervalle intermédiaire (61).

4. Procédé selon l'une quelconque des revendications 1 à 3, caractérisé en ce qu'on réalise, dans des intervalles de prétraitement (63) qui se situent avant les intervalles de travail (60), à l'aide du faisceau électronique (3), une augmentation de température et un nettoyage de la surface (1) respectivement dans une zone correspondant à l'évidement (22) et au bord (62) du cratère.

5. Procédé selon l'une quelconque des revendications 1 à 4, caractérisé en ce que l'on effectue, dans des intervalles de post-traitement (64) qui se situent après les intervalles de travail (60), à l'aide du faisceau électronique (3), respectivement, dans la zone de l'évidement (22) et de la paroi (62) du cratère, une fusion de la paroi (62) du cratère.

6. Procédé selon l'une quelconque des revendications 1 à 5, caractérisé en ce que la structure superficielle à la surface (1) du cylindre à texturer (2) est produite par un mouvement relatif entre le cylindre à texturer (2) et un générateur de faisceau générant le faisceau électronique (3) et en ce que le faisceau électronique (3) est guidé selon le mouvement relatif au moins pendant les intervalles de travail (60).

7. Dispositif pour réaliser le procédé selon l'une quelconque des revendications 1 à 6, constitué d'une chambre à vide (6) recevant le cylindre à texturer (2) et d'un dispositif de production de faisceau (7) relié à la chambre à vide (6), lequel dispositif est constitué d'un générateur de faisceau (4) pour produire le faisceau électronique (3), d'un dispositif de réglage de foyer (10) avec un premier système de lentilles (29) à grande distance focale possédant une lentille statique (32) et une lentille dynamique (31) et d'un deuxième système de lentilles à distance focale courte (30), d'un dispositif de focalisation (12) avec un troisième système de lentilles possèdent une lentille statique (36) et une lentille dynamique (37), d'un premier dispositif de commande (21; 23; 24) relié au générateur de faisceau (4) et d'un deuxième dispositif de commande (42, 44, 45, 46, 50) relié au dispositif de réglage de foyer (10) et au dispositif de focalisation (12), caractérisé en ce que le deuxième dispositif de commande présente un dispositif de synchronisation (55, 56a, 56b, 56c) relié au dispositif de réglage de foyer (10) et/ou au dispositif de focalisation (12) pour commander la densité d'énergie du faisceau électronique (3) dans les intervalles de prétraitement (63), dans les intervalles de travail (60), dans les intervalles intermédiaires (61) et dans les intervalles de post-traitement (64) par réglage de la lentille dynamique (31) et/ou de la lentille dynamique (37).
